# FASCICULE DE BREVET EUROPEEN

(11) **EP 3 192 004 B1**
(45) Date de publication et mention de la délivrance du brevet: **05.09.2018**
(21) Numéro de dépôt: 15778988.4
(22) Date de dépôt: 08.09.2015
(51) Int. Cl.: G06K 7/10

(54) **DISPOSITIF DE LECTURE DE CODE-BARRES ET MACHINE COMPRENANT UN TEL DISPOSITIF POUR L'ANALYSE AUTOMATISE D'UN ECHANTILLON**
LESEGERÄT UND BARCODE MASCHINE MIT SOLCHEN GERÄTES FÜR DEN AUTOMATISCHE-ANALYSE EINER PROBE
READING DEVICE AND BAR CODE MACHINE INCLUDING SUCH DEVICE FOR AUTOMATIC ANALYSIS OF A SAMPLE

(30) Priorité: 12.09.2014 FR 1458577
(43) Date de publication de la demande: 19.07.2017
(73) Titulaire: Biomérieux, 69280 Marcy-L'Etoile (FR)
(72) Inventeur: ORATI, Luca, 50136 Florence (IT); ROSSI, Veronica Lucia, 52100 Arezzo (IT)
(74) Mandataire: Putet, Gilles
(86) Numéro de dépôt international: PCT/FR2015/052376
(87) Numéro de publication internationale: WO 2016/038291

(56) Documents cités:
- WO-A2-2007/149876
- US-A1- 2003 201 328

## Description

L'invention concerne un dispositif de lecture de code-barres ainsi qu'une machine pour l'analyse automatisé d'un échantillon comprenant un tel dispositif.

Les systèmes de codes-barres sont utilisés dans de très nombreuses applications pour coder des informations dans un format aisément lisible par des dispositifs optiques de lecture automatisée. Un code-barres en soi est une représentation graphique qui, dans sa variante la plus courante, est constituée d'une série de barres agencées côte à côte. Les barres peuvent présenter une épaisseur différente et sont espacées l'une de l'autre par des intervalles. Les barres sont généralement noires ou sombres, tandis que les intervalles entre les barres sont dans une couleur contrastée par rapport au noir, c'est-à-dire une couleur claire, généralement blanche. De tels codes-barres sont définis par exemple par les systèmes appelés « EAN 8 », « EAN 13 », « code 39 », « code 128 », « POSTNET » etc. On notera qu'il existe aussi des systèmes appartenant à la famille des codes-barres qui, à proprement parler ne présentent pas des barres, mais présentent des modules noirs disposés dans un carré à fond blanc par exemple. De tels systèmes sont aussi appelés codes-barres en deux dimensions ou bidimensionnels et sont connus par ailleurs sous les dénominations commerciales « code QR », « Flashcode », ou « DataMatrix ». Dans tous les cas, il existe des algorithmes qui permettent de coder des informations de type numérique ou alphanumérique en des informations sous forme de codes-barres à une dimension ou à deux dimensions.

Ainsi, une information donnée est codée sous la forme d'une image, le code-barres, qui peut être apposé de manière virtuelle ou réelle sur des documents, des objets, voire même sur des êtres vivants, de manière à associer l'information codée au document, à l'objet, à l'être vivant portant le code-barres. Dans de très nombreux cas, le code-barres est apposé sur une étiquette qui est ensuite fixée sur par exemple l'objet ou le document correspondant. En résumé, un code-barres est une image codée représentative d'une information.

Afin de pouvoir récupérer l'information codée par le code-barres, il est nécessaire de disposer d'un dispositif de lecture de codes-barres qui permet d'acquérir le code-barres en le transformant d'abord sous la forme d'un signal électrique, puis éventuellement sous la forme d'une Information numérique représentative de l'information codée initiale. Cette information numérique peut ensuite être traitée pour récupérer l'information initiale.

Les dispositifs de lecture de codes-barres comprennent donc notamment un appareil de lecture de codes-barres ayant :
a) un système d'émission de lumière, ayant une source de lumière incidente, capable d'émettre une lumière incidente, selon une direction de lumière incidente vers une zone illuminée utile ;
b) un système de récupération de lumière ayant un système de conditionnement de la lumière réfléchie et capable de récupérer une lumière réfléchie d'une zone de vision utile au travers du système de conditionnement de lumière réfléchie ;
c) un capteur photoélectrique, comprenant un ou plusieurs éléments de capteur, pour convertir la lumière réfléchie récupérée au travers du système de conditionnement de lumière réfléchie, en un signal électrique représentatif de la lumière réfléchie récupérée.

Il existe différents types de systèmes d'émission de lumière. Dans un type, la source de lumière comporte un faisceau lumineux, c'est-à-dire un faisceau de lumière sensiblement parallèle présentant un faible diamètre au regard de la zone à illuminer, par exemple de type faisceau laser. Lorsqu'ils sont interceptés par un objet opaque, de tels faisceaux laissent donc apparaître une tache lumineuse ponctuelle ou quasi ponctuelle. Cette tache lumineuse présente un diamètre qui, dans une zone de travail, présente une valeur minimale. Pour pouvoir lire un code-barres, un tel faisceau lumineux doit être balayé dans une zone de travail utile qui doit correspondre au moins à la dimension d'un code-barres à lire. Dans d'autres systèmes, la source de lumière est une source qui illumine de manière uniforme ou quasi uniforme toute une zone de travail, sans balayage.

Le capteur photoélectrique a pour fonction de récupérer la lumière réfléchie par le code-barres et de la transformer en signal électrique représentatif de cette lumière réfléchie, et donc représentatif du code-barres, ce qui signifie par ailleurs que le signai électrique est représentatif de l'information codée par le code-barres.

Le système de récupération de lumière est avant tout un système optique qui permet de focaliser la lumière réfléchie par le code-barres sur le capteur photoélectrique, de telle sorte que cette lumière, focalisée, puisse être transformée en un signa! électrique représentatif du code-barres avec une précision et une densité suffisante pour, par traitement, remonter à l'information codée.

Les systèmes à code-barres sont généralement normalisés de telle sorte qu'un code-barres puisse être lu par tout type d'appareil. Toutefois, dans le cadre de cette normalisation, il est défini notamment des caractéristiques de densité du code-barres. Cette densité correspond à une dimension minimale des barres et des intervalles constituant le code-barres. Pour s'en tenir aux codes-barres à une dimension, unidimenslonnels, constitués d'une alternance de barres et d'intervalles contrastés, il existe pour chaque normalisation une largeur minimale des barres les plus fines et/ou une largeur minimale des intervalles pour assurer que, au moment de la lecture du code-barres, ces barres les plus fines et/ou ces intervalles les plus fins sont reconnus comme tels par le dispositif de lecture.

Dans un dispositif de lecture comportant un système d'émission de lumière qui illumine de manière uniforme toute la zone illuminée utile, la capacité de résolution du dispositif est essentiellement dictée par la capacité du capteur à pouvoir discriminer, au travers du système de récupération de lumière, les barres et les intervalles à coup sûr lorsque ceux-ci sont situés dans la zone de vision utile.

Dans un dispositif de lecture comportant un système d'émission de lumière émettant un faisceau lumineux, par exemple un faisceau laser ou similaire, le diamètre minimal du faisceau lorsqu'il est intercepté par le code-barres est un paramètre important qui peut limiter la capacité de résolution du dispositif, donc limiter la densité du code-barres pouvant être lu.

Dans le présent document, on considérera qu'un code-barres présente une densité plus élevée qu'un autre code-barres si la dimension minimale des barres ou des blocs qui constituent les zones noires ou les zones daires est inférieure. En d'autres termes, un code-barres de densité supérieure peut être apposé sur une superficie inférieure qu'un code-barres de densité inférieure contenant les mêmes informations codées sous le même algorithme.

Typiquement, pour les codes-barres unidimensionnels les plus courants, le code-barres doit présenter des objets codants ou barres de dimension minimale 0,254 mm. Cependant, dans certaines applications, on utilise des codes-barres de densité supérieure dont la dimension minimale des objets codants présente une dimension d'environ 0,1 mm. Donc, un dispositif ayant une capacité de résolution, c'est-à-dire un pouvoir discriminant, pour des objets codants de, par exempte, 0,2 mm sera capable de lire le premier type de code-barres, mais ne sera pas capable de lire le second type de code-barres, au sens qu'il ne pourra pas récupérer une information sans erreur du code-barres lu avec ce dispositif.

Bien entendu, un dispositif de lecture de codes-barres ayant une haute capacité de résolution, correspondant à une haute densité du code-barres, sera dans la plupart des cas capable de lire des codes-barres ayant une densité plus faible. Cependant, de tels dispositifs sont par nature généralement plus onéreux et présentent par ailleurs souvent un champ de lecture, à savoir une zone de travail utile, ayant une moins grande étendue.

Diverses propositions ont déjà été faites pour permettre d'adapter un dispositif de lecture de codes-barres afin de lui permettre de lire soit des codes-barres placés à une distance lointaine soit des codes-barres placés à une distance proche. Par exemple, le document US-5.473.149 décrit un appareil de lecture à code-barres comportant un système de récupération de lumière ayant deux ensembles de lentilles, l'une utilisée pour lire des codes-barres à une première distance de focalisation, et l'autre pour lire des codes-barres à une seconde distance de focalisation. Le dispositif décrit dans ce document utilise alternativement l'un ou l'autre des ensembles de lentilles, la zone de vision utile correspondant à un premier ensemble de lentilles et la zone de vision utile correspondant au second ensemble de lentilles étant toutes les deux centrées sensiblement sur l'axe central de la zone de travail du dispositif.

Le document US-6.909.080 décrit un agencement pour un appareil de lecture à code-barres dans lequel, sur le capteur, des micros-lentilles auxiliaires sont agencées directement sur le capteur. De la sorte, certaines zones du capteur reçoivent une lumière réfléchie au travers d'un système de récupération comportant cette micro-lentille auxiliaire ayant une première caractéristique focale, tandis que d'autres zones du capteur reçoivent une lumière réfléchie au travers d'un système de récupération comportant une autre micro-lentille auxiliaire, ayant une seconde caractéristique focale, ou n'ayant pas de micro-lentille auxiliaire.

Le document US-7.762.466 décrit un système de lentilles à deux positions pour un appareil de lecture à code-barres. Ce système de lentilles comporte une lentille mobile, en l'occurrence une lentille mince divergente qui peut être déplacée entre deux positions : une position de travail et une position escamotée. En position de travail, la lentille auxiliaire fait partie du système de récupération de lumière au sens qu'elle est traversée par la lumière réfléchie qui est dirigée par le système de récupération vers le capteur. En position escamotée, la lentille auxiliaire n'est plus utilisée et n'intercepte plus la zone de vision utile du capteur de telle sorte que la lumière réfléchie reçue par le capteur ne passe pas par la lentille auxiliaire.

Les documents US-2003/0201328 et WO-2007/149879 décrivent eux aussi des appareils de lectures de codes-barres.

Il existe un besoin non satisfait qui est de pouvoir, avec un dispositif de lecture de codes-barres donné, lire des codes-barres qui peuvent présenter des caractéristiques de densité différente.

Pour ce faire, l'invention propose un dispositif de lecture à code-barres comprenant un appareil de lecture de codes-barres ayant :
a) un système d'émission de lumière, ayant une source de lumière incidente, capable d'émettre une lumière incidente, vers une zone illuminée utile ;
b) un système de récupération de lumière ayant un système de conditionnement de la lumière réfléchie et capable de récupérer une lumière réfléchie d'une zone de vision utile au travers du système de conditionnement de lumière réfléchie ;
c) un capteur photoélectrique, comprenant un ou plusieurs éléments de capteur, pour convertir la lumière réfléchie récupérée au travers du système de conditionnement de lumière réfléchie, en un signal électrique représentatif de la lumière réfléchie récupérée
caractérisé en ce que le dispositif comprend un système optique auxiliaire qui est disposé de manière permanente dans la zone de vision utile, à distance du capteur, et en série avec le système de conditionnement de lumière réfléchie de telle sorte qu'une portion mais pas la totalité de la zone de vision utile est interceptée par le système optique auxiliaire.

Selon d'autres caractéristiques notables d'un dispositif selon l'invention :
- Le système optique auxiliaire peut définir une zone de vision utile réduite, non interceptée par le système optique auxiliaire, qui a une étendue suffisante pour qu'un premier code-barres disposé dans la zone de vision utile réduite soit illuminé par le système d'émission de lumière, et pour que la lumière réfléchie par ledit code-barres soit reçue par le capteur photoélectrique, au travers du système de conditionnement de la lumière réfléchie, sans être interceptée par le système optique auxiliaire.
- Le dispositif peut être agencé de telle sorte que le capteur soit capable de recevoir simultanément, au travers du système de conditionnement de la lumière réfléchie, une lumière réfléchie par un premier code-barres dans la zone de vision utile réduite, sans passage au travers du système optique auxiliaire, et une lumière réfléchie par un second code-barres dans la zone de vision utile auxiliaire, au travers du système optique auxiliaire.
- Le système optique auxiliaire peut être agencé à l'extérieur du système de conditionnement de lumière réfléchie et, selon une direction de lumière réfléchie, du même côté du système de conditionnement de lumière réfléchie que la zone de vision utile, à l'opposé du côté du capteur.
- Le système optique auxiliaire peut être prévu pour être capable de transmettre au capteur une image d'un code-barres complet disposé dans la zone de vision utile auxiliaire.
- Le système optique auxiliaire peut être agencé à l'intérieur de la zone illuminée utile de telle sorte qu'une portion de la zone illuminée utile soit interceptée par le système optique auxiliaire et peut ainsi définir une zone illuminée auxiliaire qui soit illuminée au travers du système optique auxiliaire.
- Le système optique auxiliaire peut être agencé à l'extérieur du système de conditionnement de lumière incidente, selon la direction de lumière incidente, d'un même côté du système de conditionnement de lumière incidente que la zone de travail utile.
- Le système optique auxiliaire peut être un système optique convergent.
- La lumière incidente peut comporter au moins un faisceau de lumière incidente qui est focalisé par le système d'émission de lumière jusqu'à une première taille minimale de focalisation dans une zone de travail utile principale comprise dans la zone de vision utile et dans la zone Illuminée utile, et le système optique auxiliaire peut focaliser le faisceau de lumière incidente jusqu'à une seconde taille minimale de focalisation dans une zone de travail utile auxiliaire comprise dans la zone de vision utile auxiliaire et dans la zone illuminée auxiliaire, ladite seconde taille minimale de focalisation étant plus petite que la première taille minimale de focalisation.
- Le système optique auxiliaire peut avoir un plan focal objet situé derrière la zone de travail utile auxiliaire.
- Le système optique auxiliaire peut être agencé dans la zone de travail utile principale.
- le système optique auxiliaire peut avoir une distance focale fixe.
- Le système optique auxiliaire peut être une lentille mince plan-convexe, notamment une lentille mince plan-convexe cylindrique, ou une lentille mince plan-convexe sphérique.
- La lumière incidente peut comporter au moins un faisceau de lumière incidente et le système de conditionnement de lumière incidente peut comprendre un dispositif de balayage par lequel le faisceau de lumière incidente est balayé au travers de la zone de travail utile principale selon au moins une première direction transversale perpendiculaire à la direction de la lumière incidente.
- Le faisceau de lumière incidente peut être balayé au travers de la zone de travail utile principale selon ladite première direction transversale et selon une seconde direction transversale, perpendiculaire à la première direction transversale et à la direction de lumière incidente.
- Le faisceau de lumière incidente peut être balayé au travers de la zone de travail principale selon au moins la première direction transversale entre une première position angulaire jusqu'à une seconde position angulaire, et le système optique auxiliaire peut être agencé de manière à être situé sur le passage du faisceau de lumière incidente entre une position intermédiaire et l'une des première ou seconde positions angulaires.
- La source de lumière incidente peut être une source de lumière unique, par exemple un laser unique ou une diode électroluminescente unique.
- Le système optique auxiliaire peut avoir une position fixe par rapport au capteur pendant le fonctionnement du dispositif.
- L'intégralité du système de récupération de lumière peut avoir une position fixe par rapport au capteur pendant le fonctionnement du dispositif.
- L'appareil de lecture de codes-barres peut comporter un boîtier qui contient au moins le système d'émission de lumière, le système de récupération de lumière et le capteur, le boîtier pouvant par ailleurs comporter au moins une fenêtre transparente au travers de laquelle la lumière incidente et la lumière réfléchie sont transmises, et le système optique auxiliaire peut être alors agencé à l'extérieur du boîtier.
- Un niveau de seuil de densité peut être un niveau au-dessus duquel l'appareil de lecture de codes-barres n'est pas capable de lire un code-barres en l'absence du système optique auxiliaire.

Selon un autre aspect de l'invention, le dispositif comporte un système optique auxiliaire qui est agencé à l'extérieur du boîtier, dans la zone de vision utile, qui intercepte une portion mais pas la totalité de la zone de vision utile, et qui définit une zone de vision auxiliaire pour le capteur

Par ailleurs, l'invention concerne aussi une machine pour l'analyse automatisée d'un échantillon, comprenant au moins un tiroir sur lequel au moins un élément pour l'analyse, tel qu'un échantillon et/ou un réactif et/ou un outil d'analyse peut être chargé, le tiroir étant mobile d'une position de chargement à une position d'utilisation, caractérisée en ce que la machine comprend un dispositif de lecture de codes-barres ayant l'une quelconque des caractéristiques précédentes pour lire au moins un code-barres ayant une densité inférieure à un niveau de seuil de densité et un second code-barres ayant une densité supérieure au niveau de seuil de densité.

Selon d'autres caractéristiques notables d'une machine selon l'invention :
- La machine peut comporter plusieurs tiroirs agencés côte-à-côte et mobile indépendamment l'un de l'autre entre une position de chargement et une position d'utilisation, et le dispositif de lecture de codes-barres peut alors être capable de lire, sur un premier tiroir, un premier code-barres ayant une densité inférieure au niveau de seuil de densité, et, sur un second tiroir, au travers du système optique auxiliaire, un second code-barres ayant une densité supérieure au niveau de seuil de densité.
- Le long de la direction de la lumière incidente, le premier tiroir peut être agencé plus près de la source de lumière incidente que le second tiroir.
- Dans au moins une première position de lecture de codes-barres du premier tiroir, le premier code-barres peut être agencé dans une zone de vision utile principale et, dans au moins une première position de lecture de codes-barres du second tiroir, le deuxième code-barres peut être agencé dans une zone de vision utile auxiliaire.
- Dans au moins une position de lecture de codes-barres du second tiroir, un code-barres situé sur le second tiroir peut être agencé dans la zone de vision utile principale.
- Les tiroirs sont mobiles entre leurs positions de chargement et leurs positions d'utilisation selon une trajectoire de tiroirs qui peut être perpendiculaire à la direction de la lumière incidente.
- Les tiroirs se déplacent entre leurs positions de chargement et leurs positions d'utilisation selon une trajectoire de tiroirs qui peut être perpendiculaire à la direction de la lumière incidente et à la première direction transversale.
- Les premiers et/ou seconds codes-barres peuvent être agencés sur les tiroirs de manière à s'étendre selon une première direction transversale perpendiculaire à la direction de la lumière incidente.
- Un boîtier de l'appareil de lecture de codes-barres et le système optique auxiliaire peuvent être fixés indépendamment l'un de l'autre sur un châssis de la machine.
- Un boîtier de l'appareil de lecture de codes-barres et le système optique auxiliaire peuvent être agencés à distance sur la machine de telle sorte qu'au moins un tiroir s'étende entre le boîtier de l'appareil de lecture à code-barres et le système optique auxiliaire.

Diverses autres caractéristiques ressortent de la description faite ci-dessous en référence aux dessins annexés qui montrent, à titre d'exemples non limitatifs, des formes de réalisation de l'objet de l'invention.

La **figure 1** est une vue schématique d'un dispositif de lecture de codes-barres selon l'art antérieur.

La **figure 2** est une vue schématique d'un dispositif de lecture de codes-barres selon un mode de réalisation de l'invention.

La **figure 3** est une vue d'une machine pour l'analyse automatisée d'un échantillon dans lequel un dispositif de lecture de codes-barres selon l'invention peut être intégré.

La **figure 4** est une vue en perspective d'une partie d'une machine telle qu'illustrée à la **figure 3****,** illustrant un premier tiroir dans une position intermédiaire entre une position de chargement et une position d'utilisation.

La **figure 5** est une vue en perspective d'une partie d'une machine telle qu'illustrée à la **figure 3****,** illustrant un second tiroir dans une position intermédiaire entre une position de chargement et une position d'utilisation.

La **figure 6** est une vue de face d'une partie d'une machine telle qu'illustrée à la **figure 3****,** illustrant uniquement le châssis de cette partie de la machine sur lequel est installé un dispositif de lecture de codes-barres selon l'invention.

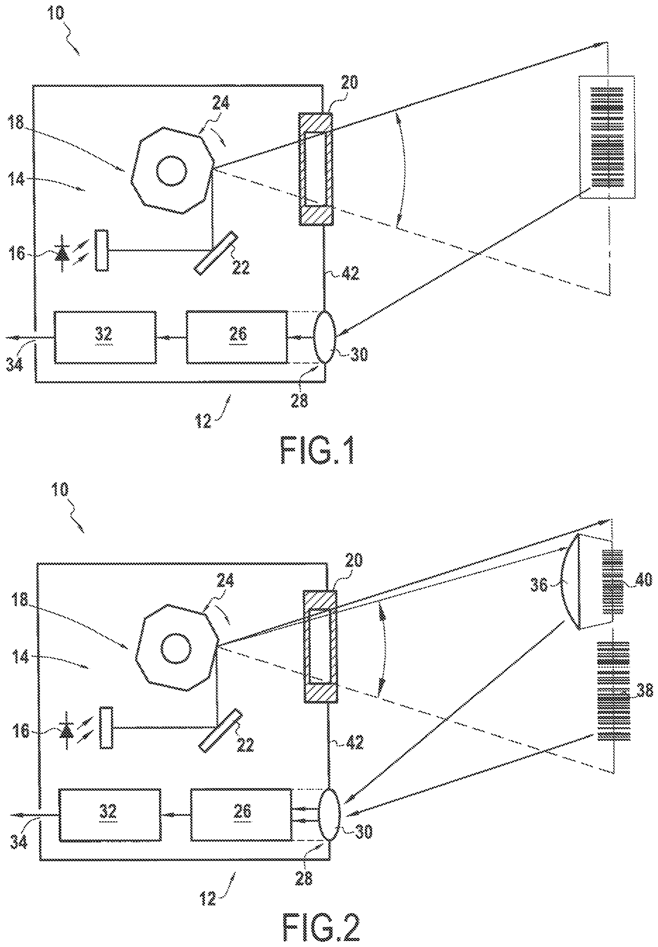

On a représenté sur la **figure 1** un dispositif de lecture de codes-barres **10** conforme à l'état de la technique.

Le dispositif de lecture de code-barres **10** comprend un appareil de lecture de codes-barres **12** ayant un système d'émission de lumière **14** pour illuminer une zone utile dans laquelle on devra présenter le code-barres pour qu'il soit lu par l'appareil.

Le système d'émission de lumière **14** comporte une source de lumière incidente **16,** monochromatique ou polychromatique, qui peut par exemple comporter une ou plusieurs sources individuelles, par exemple sous la forme d'une source laser, d'une ou plusieurs diodes électroluminescentes (DEL), voire même d'une source lumineuse à incandescence. De préférence, la source **16** est une source de lumière unique, par exemple une source laser unique ou une diode électroluminescente unique.

Le système d'émission de lumière **14** peut être un système d'émission d'un champ de lumière recouvrant de manière sensiblement uniforme et simultanément l'intégralité d'une zone illuminée utile sans balayage. Alternativement, comme dans le mode de réalisation illustré, le système peut être un système d'émission d'un faisceau lumineux, par exemple sous la forme d'un faisceau laser ou d'un faisceau très fin de lumière collimatée. Typiquement, un faisceau de lumière n'éclaire, à un instant donné, qu'une très faible partie de la zone de travail. Dans l'exemple illustré, la source de lumière incidente **16** est une source laser monochromatique qui émet par exemple un faisceau laser dont la longueur d'onde est de 650 nm.

Le système d'émission de lumière **14** peut par ailleurs comporter un système de conditionnement de lumière incidente **18.** Le système de conditionnement **18** peut être très simple et éventuellement être constitué uniquement d'un diaphragme optique **20** destiné à délimiter une zone illuminée. Le système de conditionnement **18** peut par ailleurs comporter un ou plusieurs miroirs réfléchissants **22** pour orienter la lumière émise, par exemple agencé entre la source de lumière incidente **16** et un diaphragme de sortie **20.** Cependant, notamment pour les systèmes d'émission de lumière émettant un faisceau lumineux, le système de conditionnement pourra comporter notamment des moyens optiques de collimation/focalisation/délocalisation, tels que des systèmes de lentilles optiques, permettant par exemple de générer à partir d'une source ponctuelle rayonnante un faisceau à rayons parallèles ou quasi parallèles. Le système de conditionnement de lumière incidente **18** peut aussi comporter des moyens de filtrage de la lumière, par exemple pour éliminer certaines fréquences de la lumière fournie par la source de lumière **16.** Ces moyens de filtrage peuvent comporter un simple filtre et/ou un filtre interférentiel. Ainsi, le système de conditionnement de lumière incidente **18** transforme la lumière brute fournie par la source **16** en une lumière incidente apte à illuminer un code-barres situé dans une zone de travail utile principale de telle sorte que cette lumière incidente, réfléchie par le code-barres, puisse être récupérée et décodée par l'appareil de manière à récupérer l'information codée par le code-barres.

Par ailleurs, le système de conditionnement de lumière **18** peut comporter, notamment dans le cas d'une source d'émission de lumière incidente émettant un faisceau lumineux, un système de balayage **24** de telle sorte que la lumière incidente balaye une zone définie, de manière répétitive. Le balayage au travers de la zone illuminée utile principale se fait au moins selon une première direction transversale perpendiculaire à la direction de la lumière incidente. Ce balayage est alors unidimensionnel, de sorte que le faisceau lumineux est défléchi de manière à se propager toujours dans un même plan. Il peut être aussi bidimensionnel, par exemple lorsque le faisceau est défléchi de manière à se propager dans un plan et aussi à se propager dans une direction perpendiculaire à ce plan. Dans ce second cas, le faisceau est également défléchi selon une seconde direction transversale, perpendiculaire à la première direction transversale et à la direction de la lumière incidente.

Dans le premier cas, si une surface opaque et présentée devant la lumière incidente, le faisceau lumineux se déplace donc selon une ligne sur la surface opaque. Dans le second cas, le faisceau se déplace selon une succession de lignes parallèles sur la surface opaque, de telle sorte que si les lignes parallèles sont suffisamment proches, on peut considérer qu'une zone surfacique est illuminée par le faisceau. Dans le mode de réalisation illustré, le système de balayage **24** comporte un prisme octogonal réfléchissant qui est entraîné en rotation, autour d'un axe central parallèle à ces surfaces latérales réfléchissantes, à une vitesse continue. Le prisme est interposé dans le trajet de la lumière incidente entre la source de lumière incidente **16** et un diaphragme de sortie **20** pour créer un balayage unidimensionnel d'une zone illuminée utile par le faisceau lumineux.

De la sorte, le système d'émission de lumière **14** émet une lumière incidente, selon une direction de lumière incidente, vers une zone illuminée utile, laquelle peut être déterminée en fonction du passage de la lumière incidente à travers le système de conditionnement. La direction principale de la lumière incidente peut être définie comme étant la direction d'un rayon lumineux émis par l'appareil atteignant le centre de la zone illuminée. Dans le cas d'un système d'émission d'un champ de lumière étendue, la lumière peut ne pas être une lumière parallèle mais une lumière divergente ayant la direction centrale comme direction principale dans le centre de la zone illuminée. Dans le cas d'un système d'émission d'un faisceau lumineux avec balayage, le faisceau lumineux présente une direction qui est défléchie de part et d'autre de cette direction principale.

De manière générale, une zone utile au sens de l'invention est une zone de l'espace située devant l'appareil pour laquelle la lumière réfléchie par un code-barres situé dans cette zone pourra être récupérée et décodée par l'appareil de manière à récupérer l'information codée par le code-barres. Une zone utile peut généralement être définie par un angle de vision depuis le système de conditionnement optique, cet angle de vision étant un angle plan unidimensionnel ou un angle solide bidimensionnel. Elle peut être généralement définie aussi par une profondeur de champ dans la direction de déplacement de la lumière.

Ainsi, la zone illuminée utile correspond à la zone illuminée par la source de lumière incidente dans des conditions telles que, si cette lumière est réfléchie par un code-barres disposé dans cette zone utile illuminée, la lumière réfléchie pourra être récupérée et décodée par l'appareil de manière à récupérer l'information codée par le code-barres.

L'appareil **12** de lecture de codes-barres comporte par ailleurs un capteur photoélectrique **26,** comprenant un ou plusieurs éléments de capteur, pour convertir une lumière réfléchie récupérée en un signal électrique représentatif de la lumière réfléchie récupérée. Cette lumière réfléchie est vue par le capteur **26** au travers d'un système de récupération de lumière **28,** comportant notamment un système de conditionnement de lumière réfléchie **30.** Le système de récupération de lumière **28** est capable de récupérer une lumière réfléchie d'une zone de vision utile, par exemple une lumière réfléchie par un code-barres. La zone de vision utile est donc associée au capteur **26** et au système de conditionnement de lumière réfléchie **30** comme étant la zone de l'espace pour laquelle une image située dans cette zone peut être vue avec un niveau de résolution suffisant par le capteur.

Le système de conditionnement de lumière réfléchie **30** peut notamment comporter un système de lentilles optiques, notamment un système convergent, permettant de focaliser sur le capteur **26** l'image d'un objet tel qu'un code-barres positionné dans la zone de vision utile, avec une netteté suffisante pour que cette image puisse être décodée par l'appareil de manière à récupérer l'information codée par le code-barres.

L'appareil de lecture de code-barres **12** peut par ailleurs comporter un dispositif de traitement de signal **32,** qui peut comporter notamment des filtres analogiques et/ou numériques, un ou plusieurs convertisseurs analogiques-numériques, éventuellement un microprocesseur et de la mémoire, etc..., pour convertir le signal électrique représentatif de la lumière réfléchie récupérée en données numériques. L'appareil **12** comporte généralement par ailleurs une sortie **34,** analogique ou numérique, par laquelle le signal électrique représentatif ou les données numériques converties à partir de ce signal électrique représentatif peuvent être communiquées à un système de traitement informatique. Cette liaison peut être une liaison filaire ou une liaison sans fil.

On peut définir pour le dispositif de lecture de codes-barres une zone de travail utile principale s'étendant selon une direction de profondeur correspondant à la direction de la lumière incidente et selon au moins une première direction transversale perpendiculaire à la direction de lumière incidente. Cette zone de travail utile principale est comprise dans l'intersection de la zone illuminée utile et de la zone de vision utile. Cette zone de travail utile principale est telle que, lorsqu'un premier code-barres, ayant une densité inférieure à un niveau de seuil de densité, est disposé dans la zone de travail utile principale, ce premier code-barres peut être illuminé par le système d'émission de lumière et la lumière réfléchie par ce premier code-barres peut être convertie en données numériques par le capteur et le convertisseur numérique, sans devoir passer par un système optique auxiliaire.

On a illustré sur la **figure 2** un exemple de réalisation d'un dispositif selon l'invention. Dans ce dispositif, l'appareil de lecture de codes-barres **12** est identique à l'appareil décrit en relation à la **figure 1** et ne sera donc pas décrit plus avant. En revanche, le dispositif **10** comporte, en plus, un système optique auxiliaire **36** qui est disposé de manière permanente dans la zone de vision utile, à distance du capteur **26,** et en série avec le système de conditionnement de lumière réfléchie **30** de telle sorte qu'une portion mais pas la totalité de la zone de vision utile est interceptée par le système optique auxiliaire.

La zone de vision utile est dite interceptée par le système optique auxiliaire par référence à la trajectoire du rayon lumineux provenant d'un objet situé dans la zone de vision utile et atteignant le capteur **26** au travers du système de récupération de lumière sans passer par le dit système optique auxiliaire. La zone de vision utile est dite interceptée par le système optique auxiliaire si le système optique auxiliaire est situé sur la trajectoire de ce rayon lumineux.

Le système optique auxiliaire **36** peut comprendre un seul élément optique, ou plusieurs éléments optiques, notamment agencés en série dans la trajectoire du rayon lumineux.

De préférence, le système optique auxiliaire **36** est un système optique convergent. Dans l'exemple illustré, ce système optique est une simple lentille optique convergente, de préférence une lentille mince. Plus précisément, la lentille mince peut-être une lentille plan convexe, soit cylindrique soit sphérique.

Comme le système optique auxiliaire **36** est agencé dans la zone de vision utile, il crée, derrière lui selon la direction de la lumière incidente, une zone de vision utile auxiliaire. Cette zone de vision utile auxiliaire correspond à la zone de l'espace qui est vue par le capteur au travers du système optique auxiliaire **36** en série avec le système de conditionnement de la lumière réfléchie **30.** Cette zone de vision utile auxiliaire est telle que lorsqu'un second code-barres est disposé dans cette zone, la lumière réfléchie par ce second code-barres peut être convertie en données numériques par le capteur et le dispositif de traitement de signal en traversant successivement le système optique auxiliaire **36** et le système de conditionnement optique de lumière réfléchie **30.**

De préférence, le système optique auxiliaire **36** est agencé à l'extérieur du système de conditionnement de lumière réfléchie **30** et, selon une direction de lumière réfléchie, du même côté du système de conditionnement de lumière réfléchie **30** que la zone de vision utile, à l'opposé du côté du capteur **26.** Dans ce cas aussi, le système optique auxiliaire **36** est donc à distance du capteur au sens qu'il n'est pas en contact avec celui-ci.

Dans l'exemple illustré sur les figures, le système optique auxiliaire définit une zone de vision utile réduite, non interceptée par le système optique auxiliaire, qui a une étendue suffisante pour qu'un premier code-barres disposé dans la zone de vision utile réduite soit illuminé par le système d'émission de lumière, et pour que la lumière réfléchie par ledit code-barres soit reçue par le capteur photoélectrique sans être interceptée par le système optique auxiliaire **36.** De préférence, la zone de vision utile réduite représente, en étendue angulaire telle que vue depuis l'entrée du système de récupération de lumière réfléchie **28,** plus de 50% de la zone de vision utile principale, de préférence plus de 75%.

De préférence, comme illustré sur la **figure 2****,** le dispositif de lecture de codes-barres selon l'invention est agencé de telle sorte que le capteur **26** est capable de recevoir simultanément une lumière réfléchie par un premier code-barres **38** dans la zone de vision utile réduite, sans passage au travers du système optique auxiliaire **36,** et une lumière réfléchie par un second code-barres **40** dans la zone de vision utile auxiliaire, au travers du système optique auxiliaire **36.**

Par ailleurs, le dispositif de lecture de codes-barres est agencé de telle sorte que le système optique auxiliaire **36** est capable de transmettre au capteur **26** une image d'un code-barres complet **40** disposé dans la zone de vision utile auxiliaire. Autrement dit, la zone de vision auxiliaire correspond un angle de vision suffisant pour que dans sa profondeur de champ, l'étendue de l'angle de vision puisse accommoder un code-barres complet, en tous les cas au moins un code-barres présentant une densité supérieure à un niveau de seuil de densité.

Dans l'exemple illustré, le système optique auxiliaire **36** est agencé à l'intérieur de la zone illuminée utile de telle sorte qu'une portion de la zone illuminée utile est interceptée par le système optique auxiliaire et définit une zone illuminée auxiliaire qui est illuminée au travers du système optique auxiliaire. Cette zone illuminée utile auxiliaire s'étend derrière le système optique auxiliaire **36** dans le sens de propagation de la lumière incidente, c'est-à-dire derrière le système optique auxiliaire **36** vu depuis la source de lumière incidente, ou encore sur la droite du système auxiliaire optique **36** en considérant la **figure 2****.**

Dans le cas où, comme illustré sur les figures, la lumière incidente comporte au moins un faisceau de lumière incidente, ce faisceau de lumière forme, sur un objet opaque agencé dans la zone de travail utile une tache lumineuse contenue de préférence dans un diamètre d'environ 1 mm. Sur la profondeur de champ, ce diamètre peut varier dans la mesure où un tel faisceau n'est jamais parfaitement parallèle, y compris pour le cas d'un faisceau laser. Dans tous les cas, il sera considéré que le faisceau est focalisé par le système d'émission de lumière jusqu'à une première taille minimale de focalisation dans la zone de travail utile principale comprise dans la zone de vision utile et dans la zone illuminée utile. Selon un aspect de invention, lorsque la lumière incidente comporte un faisceau de lumière incidente, et que le système optique auxiliaire intercepte la zone illuminée utile, le système optique auxiliaire focalise le faisceau de lumière incidente jusqu'à une seconde taille minimale de focalisation dans une zone de travail utile auxiliaire comprise dans la zone de vision utile auxiliaire et dans la zone illuminée auxiliaire, ladite seconde taille minimale de focalisation étant plus petite que la première taille minimale de focalisation. De la sorte, le faisceau de lumière incidente, qui en l'absence de système optique auxiliaire, serait insuffisamment précis pour permettre le décodage d'un code-barres ayant une densité supérieure à un niveau de seuil de densité, pourra, grâce à sa focalisation à travers le système optique auxiliaire, être capable de permettre la lecture d'un tel code-barres situé dans la zone de travail utile auxiliaire.

De préférence, le système optique auxiliaire **36** est agencé à l'extérieur du système de conditionnement de lumière incidente, selon la direction de lumière incidente, d'un même côté du système de conditionnement de lumière incidente **18** que la zone de travail utile.

De préférence, le système optique auxiliaire a un plan focal objet situé derrière la zone de travail utile auxiliaire. En d'autres termes, on placera un code-barres de haute densité de préférence derrière le système optique auxiliaire vu depuis l'appareil de lecture de code-barres.

Le système optique auxiliaire peut être agencé dans la zone de travail utile principale, ou à proximité de celle-ci dans la direction de la profondeur de champ. De préférence, le système optique auxiliaire **36** est le seul système optique traversé par la lumière incidente et par la lumière réfléchie dans la zone de travail utile principale. De préférence, si le système optique auxiliaire comprend plusieurs éléments optiques en série, les lumières incidente et réfléchie traversent les mêmes éléments optiques du système optique auxiliaire.

Dans l'exemple illustré, le système optique auxiliaire **36** a une distance focale fixe, ce qui permet d'utiliser des composants optiques simples. De même, le système optique auxiliaire **36** a une position fixe par rapport au capteur **26,** mais aussi de préférence par rapport à la source **16,** pendant le fonctionnement du dispositif. De même, l'intégralité du système de récupération de lumière a une position fixe par rapport au capteur pendant le fonctionnement du dispositif. Autrement dit, le dispositif est capable de lire un premier code-barres situé dans la zone de travail utile réduite et/ou un second code-barres situé dans la zone de travail utile auxiliaire sans qu'il ne soit nécessaire de déplacer le système optique auxiliaire, et de préférence sans avoir à modifier le fonctionnement du système de récupération de lumière et/ou le système de conditionnement de la lumière incidente. De plus, dans l'exemple illustré, ni le capteur, ni la source de lumière incidente n'ont besoin d'être déplacés lors du fonctionnement du dispositif pour assurer la lecture du premier ou du second code-barres tels que mentionnés ci-dessus.

Dans le cadre d'un dispositif avec système d'émission d'un faisceau de lumière à balayage, le faisceau de lumière incidente est balayé au travers de la zone de travail principale selon au moins la première direction transversale entre une première position angulaire et une seconde position angulaire. Dans ce cas, le système optique auxiliaire est de préférence agencé de manière à être situé sur le passage du faisceau de lumière incidente entre une position intermédiaire et l'une des première ou seconde positions angulaires. Autrement dit, le système optique auxiliaire **36** n'intercepte qu'une partie de la zone illuminée utile.

Dans l'exemple de réalisation telle qu'illustré sur la **figure 2****,** l'appareil de lecture de codes-barres **12** comporte un boîtier **42** qui contient au moins le système d'émission de lumière **14,** le système de récupération de lumière **28** et le capteur **26.** Comme dans l'exemple, le boîtier **42** peut comporter au moins une fenêtre transparente au travers de laquelle la lumière incidente et la lumière réfléchie sont transmises. En l'occurrence, deux fenêtres transparentes sont représentées, l'une pour la lumière incidente et l'autre pour la lumière réfléchie. De plus, dans l'exemple illustré, la fenêtre pour la lumière incidente est constituée par le diaphragme optique **20** et la fenêtre pour la lumière réfléchie est constituée par la lentille **30** faisant partie du système de conditionnement de la lumière réfléchie **28.** D'autres configurations seraient possibles pour la fenêtre transparente. Bien évidemment, la notion de transparence s'apprécie par rapport à la lumière incidente et par rapport à la lumière réfléchie. Dans la pratique, le boîtier est de préférence fermé, voire étanche. De même, comme illustré sur la figure deux, le dispositif de traitement de signal **32** est lui aussi intégré dans le bottier tandis que la sortie **34** peut comporter un connecteur porté par le boîtier **42.**

Dans une version de l'invention, comme celle illustré sur les figures, le système optique auxiliaire est agencé à l'extérieur du boîtier. Comme on le verra par la suite, le système optique auxiliaire peut même ne pas être fixé au boîtier. On comprend donc que le système optique auxiliaire est indépendant de l'appareil de lecture de codes-barres **12,** lequel peut parfaitement fonctionner sans le système optique auxiliaire, au moins pour assurer la lecture de codes-barres présentant une densité inférieure à un niveau de seuil de densité pour cet appareil. Autrement dit, le niveau de seuil de densité est un niveau au-dessus duquel l'appareil de lecture de codes-barres n'est pas capable de lire un code-barres en l'absence du système optique auxiliaire.

Le dispositif de lecture de codes-barres selon l'invention peut donc lire des codes-barres qui peuvent se présenter à des distances différentes de l'appareil de lecture, qui peuvent présenter des caractéristiques de densité différente, et qui peuvent par ailleurs dans certains cas se présenter simultanément

Il sera maintenant décrit une application particulière d'un dispositif de lecture à code-barres selon l'invention. En effet, un tel dispositif de lecture à code-barres peut être utilisé dans une machine pour l'analyse automatisée d'un échantillon, notamment une machine du type commercialisé par la demanderesse sous la dénomination commerciale «VIDAS 3 ». Ce type de machine permet de réaliser des analyses biologiques sur des échantillons biologiques de manière automatisée, et avec la possibilité de pratiquer, sur une même machine, différentes analyses sur un même échantillon ou sur des échantillons différents.

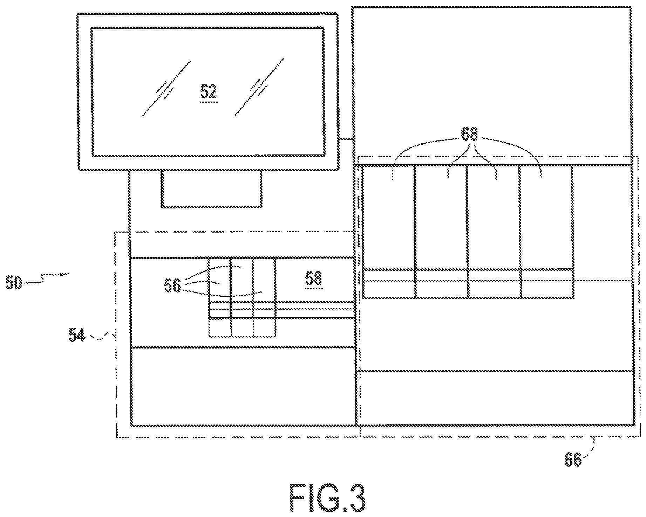

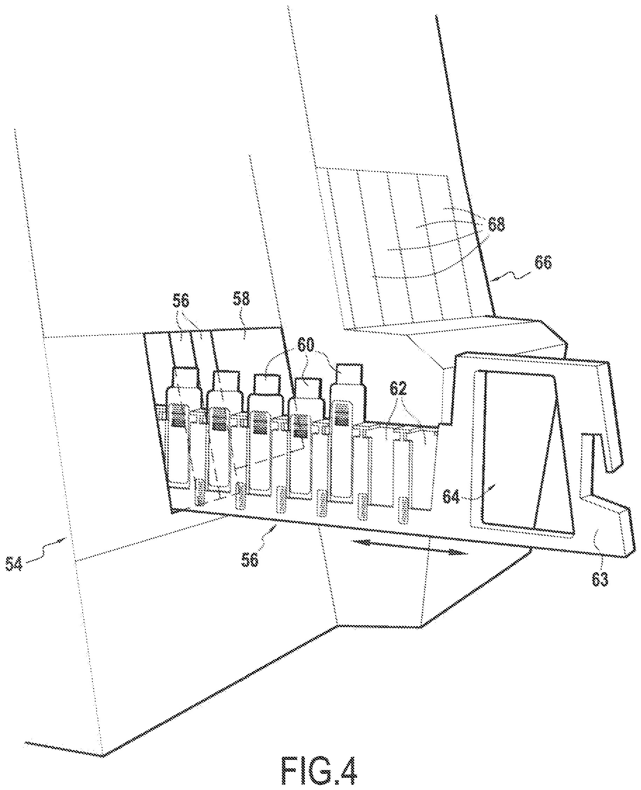

Une machine de ce type est illustrée en vue de face sur la **figure 3****.** Sur la face avant visible de cette machine **50,** on dénote dans une partie supérieure gauche un écran de visualisation **52,** qui peut être tactile pour servir aussi de moyens d'interface homme-machine permettant à un utilisateur d'entrer des données, de sélectionner des fonctions etc.... Dans une partie inférieure gauche, appelée partie pré-analytique **54,** on peut distinguer une série de trois tiroirs primaires **56** et un second tiroir secondaire **58,** qui sont agencés côte à côte. Chacun de ces tiroirs **56, 58** est prévu pour être mobile, indépendamment les uns des autres, entre une position de chargement et une position d'utilisation, ici par un coulissement linéaire selon une trajectoire horizontale perpendiculaire à la face avant. Les notions de « avant », « arrière », « horizontal », « vertical » etc. sont utilisées ici à titre indicatif en référence à l'orientation normale d'une telle machine telle qu'illustrée sur les figures. Comme on peut le voir sur la **figure 4****,** les tiroirs primaires **56** sont prévus pour recevoir par exemple des échantillons, des produits diluants, des réactifs, des produits de référence etc. contenus par exemple dans des récipients **60** de formes variées. Chaque premier tiroir primaire **56** peut ainsi porter plusieurs récipients **60,** chaque récipient **60** étant reçu dans un emplacement **62** prédéterminé du tiroir primaire **56.** On notera par ailleurs que chacun des premiers tiroirs primaires **56** peut-être amovibles de la machine pour permettre une préparation et un chargement des tiroirs en dehors de la machine, permettant ainsi de faire cette étape de préparation pendant que la machine fonctionne avec d'autres tiroirs primaires en position d'utilisation. Chaque tiroir primaire **56** peut comporter un ou plusieurs codes-barres permettant d'identifier par exemple les différents tiroirs primaires **56** et/ou les différents emplacements. Les différente récipients **60** ou autres objets destinés à être reçu dans les emplacements de ces tiroirs peuvent aussi comporter un code-barres. On remarquera par ailleurs que chaque tiroir primaire **56** comporte, à son extrémité avant, une poignée de préhension **63** et une fenêtre de préhension **64** ouverte selon une direction latérale horizontale perpendiculaire à la direction avant/arrière de la trajectoire du tiroir primaire 56. La zone de chargement des récipients sur le tiroir primaire est située en arrière de la fenêtre de préhension **64,** de sorte que la fenêtre de préhension se trouve agencée entre la poignée de préhension **63** formant l'extrémité avant du tiroir **56** et la zone de chargement arrière du tiroir. On remarquera par ailleurs que les codes-barres sont de préférence tous orientés latéralement, c'est-à-dire dans un plan sensiblement vertical et parallèle à la trajectoire de coulissement des tiroirs, et tournés vers la gauche de la machine par rapport à l'orientation des figures.

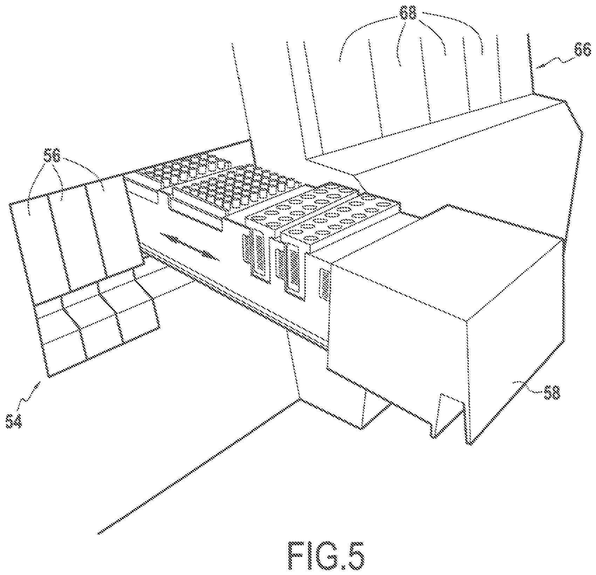

Sur la **figure 5****,** on a illustré un tiroir secondaire **58** qui, dans cet exemple d'application, est par exemple destiné à recevoir des outils d'analyse, par exemple des outils jetables utilisés par la machine dans le processus d'analyse automatisée. Ces outils, par exemple des embouts de pipette ou des coupelles de dilution, peuvent être portés par des plateaux amovibles que l'on peut déposer, de préférence à des endroits prédéterminés, sur le tiroir secondaire **58.** Le tiroir secondaire peut lui aussi être amovible de manière à ce que plusieurs tiroirs secondaires **58** puissent être utilisés alternativement sur la machine, d'où un éventuel besoin d'identifier quel tiroir secondaire **58** est installé sur la machine, ce qui peut justifier de la présence d'un code-barres sur chacun des tiroirs secondaires. De plus, les différents plateaux amovibles portés par un tiroir secondaire peuvent aussi être équipés d'un code-barres.

Par ailleurs, on distingue sur la **figure 3** une partie droite de la machine, parfois qualifié de partie analytique **66,** et qui comporte elle aussi des tiroirs 68 pouvant par exemple recevoir des barrettes d'analyse jetables.

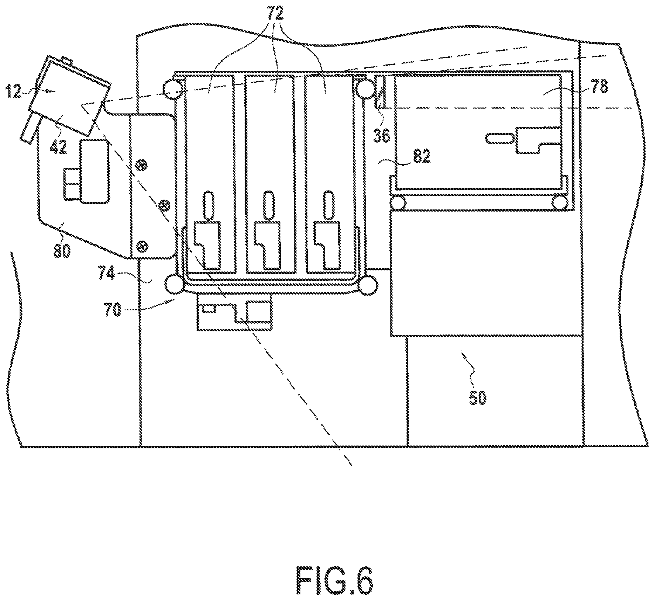

On a illustré sur la **figure 6** une partie d'un châssis **70** de la machine **50,** en l'occurrence, à titre d'exemple, la partie correspondant à la partie pré-analytique **54** de la machine. On distingue trois logements **72** qui sont destinés à recevoir chacun un des trois tiroirs primaires **56** et qui débouchent dans une paroi verticale avant **74** du châssis. Plus précisément, seule la zone de chargement des tiroirs **56** est destinée à être engagée à intérieur de ces logements **72,** y compris lorsque les tiroirs primaires **56** sont en position d'utilisation, de sorte que la poignée de préhension **63** et la fenêtre de préhension **64** restent agencées en avant de la paroi verticale avant **74** du châssis dans cette position d'utilisation.

Sur la figure **6****,** on peut voir par ailleurs un tiroir secondaire **58** engagé dans un logement **78** correspondant. On note par ailleurs que, de préférence, il existe un décalage selon la direction horizontale de coulissement des tiroirs entre la paroi verticale avant **74** du châssis **70** et la face avant de la machine, telle que visible sur la **figure 3****,** qui est formée par des panneaux de carrosserie et par les faces avant des poignées de préhension des tiroirs **56, 58.** Ce décalage détermine un espace qui s'étend ainsi entre la paroi verticale avant **74** et la face avant de la machine formée notamment par les panneaux de carrosserie.

Sur la **figure 6****,** on voit que la machine est équipée d'un dispositif de lecture de code-barres selon l'invention pour lire au moins un code-barres ayant une densité inférieure au niveau de seuil de densité et un second code-barres ayant une densité supérieure au niveau de seuil de densité.

De préférence, le dispositif est installé sur la machine de manière à être capable de lire, sur au moins un premier tiroir, un premier code-barres ayant une densité inférieure au niveau de seuil de densité, et, sur au moins un second tiroir, au travers du dispositif optique auxiliaire, un second code-barres ayant une densité supérieure au niveau de seuil de densité. Par exemple, le premier tiroir peut être un tiroir primaire **56** et le second tiroir peut-être le tiroir secondaire **58.**

Dans l'exemple illustré, on voit ainsi que l'appareil de lecture de codes-barres **12** est monté sur une platine **80** fixée sur la paroi avant **74** du châssis **70.** L'appareil est donc reçu dans l'espace entre la face avant verticale **74** du châssis **70** et la face avant de la machine. L'appareil **12** est disposé de telle sorte que les directions principales des lumières incidente et réfléchie émise et reçue par l'appareil soient contenues dans un plan frontal contenant les directions verticale et latérale, perpendiculaires à la direction de coulissement des tiroirs **56, 58.** Ainsi, les tiroirs se déplacent entre leurs positions de chargement et leurs positions d'utilisation selon une trajectoire de tiroirs qui est perpendiculaire à la direction de lumière incidente et à la première direction transversale de balayage.

Dans l'exemple illustré, la zone de travail utile principale de l'appareil **12** s'étend, dans le plan frontal, sur une étendue angulaire d'environ 60° de manière à couvrir intégralement ou quasi intégralement un volume traversé par chacun des tiroirs **56, 58.** Dans l'exemple illustré, l'appareil **12** est positionné en haut à gauche de la baie de chargement formé par les tiroirs **56, 58,** et légèrement en avant par rapport à la paroi avant **74.** Toutefois, l'appareil **12** est agencé à l'intérieur de la carrosserie de la machine, et notamment derrière une façade avant. Selon un aspect particulier, lorsque l'un des tiroirs primaires **56** est en position d'utilisation, repoussé à fond à l'intérieur de son logement **72,** sa fenêtre de préhension **64** est agencée pour correspondre à la position du plan frontal balayé par la lumière incidente. Ainsi, lorsqu'un tiroir primaire ou un tiroir secondaire se trouve dans une position de chargement ou une position intermédiaire, sa face latérale tournée vers la gauche, donc tournée vers l'appareil de lecture de code-barres **12,** est donc exposée à la lumière incidente de telle sorte qu'un code-barres positionné sur cette face latérale pourra être illuminé par l'appareil et pourra réfléchir une lumière susceptible d'être récupérée et décodée par l'appareil **12.** Si le tiroir concerné n'est pas le tiroir primaire **56** situé le plus à gauche, c'est-à-dire celui situé le plus près de l'appareil **12** et donc de la source de lumière **16,** l'illumination du code-barres et la récupération de la lumière réfléchie par le code-barres se fait au travers de la ou des fenêtres de préhension **63** du ou des tiroir(s) primaire(s) situé(s) à gauche de ce tiroir.

À titre principal, l'appareil de lecture optique **14** est utilisé pour lire et décoder des codes-barres portés par l'un des trois tiroirs primaires **56.** De la sorte, l'agencement est tel que la zone occupée par ces tiroirs primaires **56** dans le plan frontal de balayage de la lumière incidente coïncide avec la zone de travail utile principale de l'appareil de lecture à code-barres **12.**

Comme on peut le voir plus particulièrement sur la **figure 6****,** le système optique auxiliaire **36,** ici constitué d'une simple lentille mince convergente plan-convexe, est fixé, par exemple par une platine, sur le châssis **70,** en l'occurrence aussi sur la paroi avant **74.** Plus précisément, le système optique auxiliaire **36** est fixé sur une portion **82** de la paroi avant **74** qui se situe entre les logements **72** prévus pour les tiroirs primaires **56** et le logement **78** prévu pour le tiroir secondaire **58.** Ainsi, avec cette disposition du système optique auxiliaire **36,** la zone de vision utile auxiliaire et la zone illuminée utile auxiliaire se situent en arrière de la zone de travail utile principale correspondant aux tiroirs primaires **56** selon la direction latérale de propagation de la lumière incidente. En conséquence, l'appareil de lecture de codes-barres **12** et le système optique auxiliaire **36** sont agencés à distance sur la machine **50** de telle que sorte qu'au moins un tiroir **56** s'étend entre l'appareil de lecture à code-barres **12,** notamment le boîtier de l'appareil, et le système optique auxiliaire **36.**

Cependant, on peut voir que le système optique auxiliaire **36** est, dans le plan frontal, agencé de manière à n'intercepter qu'une très faible partie de la zone illuminée utile et de la zone de vision utile de l'appareil **12.** La zone dans laquelle se situe le système optique auxiliaire correspond sensiblement à une portion angulaire d'extrémité de la zone de travail utile. De la sorte, la zone de travail utile réduite, qui correspond à celle qui n'est pas interceptée par le système optique auxiliaire **36,** s'étend en dessous du système optique auxiliaire **36.** La zone de travail utile auxiliaire, qui correspond à la zone pour laquelle un code-barres est illuminé à travers le système optique auxiliaire **36** et pour laquelle la lumière réfléchie par le code-barres est vue par le capteur **26** également au travers du système optique auxiliaire, correspond sensiblement à une partie haute du tiroir **58.** De la sorte, un code-barres agencé sur le tiroir secondaire **58** dans cette partie haute sera vu par l'appareil de lecture de code-barres au travers du système auxiliaire optique **36.** Au contraire, un code-barres agencé sur une partie basse du tiroir **58** sera ainsi agencé dans la zone de travail utile principale réduite, et sera vu par l'appareil **12** sans passage de la lumière incidente ni de la lumière réfléchie au travers du système optique principal. Ainsi, dans au moins une position de lecture de code-barres du second tiroir, un code-barres situé sur le second tiroir est agencé dans la zone de travail utile principale.

De préférence, dans la mesure où l'appareil de lecture de codes-barres **12** est un appareil à balayage laser unidimensionnel, les codes-barres sont agencés sur les tiroirs de manière à s'étendre selon la première direction transversale de balayage. En l'occurrence, comme la direction de balayage est une direction contenue dans le plan frontal vertical, le code-barres est donc de préférence agencé avec les barres et les intervalles qui sont espacés l'un de l'autre selon la direction verticale, les barres étant donc des barres horizontales.

Dans l'exemple illustré sur les figures, la lentille plan-convexe utilisée en tant que système optique auxiliaire **36** est une lentille dont la surface convexe est une surface cylindrique dont le rayon de courbure est de 26,7 mm. La hauteur de la lentille selon la première direction transversale de balayage, en l'occurrence la direction verticale de la machine, est par exemple de 18 mm. L'axe de la surface cylindrique de la lentille est agencé perpendiculairement à la première direction transversale de balayage, de sorte qu'il est agencé horizontalement, parallèlement à la direction de coulissement des tiroirs. La largeur de la lentille selon l'axe de la surface cylindrique est par exemple de 12 mm. La distance focale de la lentille est de 25 mm environ et la lentille est positionnée sur la machine de manière à être à moins de 20 mm de la surface latérale du tiroir 58 qui porte le code-barres. Par ailleurs, la lentille est positionnée à environ 150 mm de l'appareil de lecture de code-barres **12.** Avec un tel dispositif, des essais ont montré qu'il était possible de lire, sur la face latérale du tiroir secondaire **58,** des codes-barres ayant une densité de 3,3 mils (millièmes de pouce) à l'aide d'un appareil de lecture à code-barres **12** dont la résolution, en l'absence de dispositif optique auxiliaire, ne permet pas de lire des codes-barres ayant une densité supérieure à 10 mils, c'est-à-dire ne permet pas de lire des codes-barres dont des barres sont rapprochées de moins de 10/1000 de pouce.

L'invention n'est pas limitée aux exemples décrits et représentés car diverses modifications peuvent y être apportées sans sortir de son cadre.

## Revendications

1. Dispositif (**10**) de lecture de code-barres comprenant un appareil (**12**) de lecture de code-barres ayant :
a) un système d'émission de lumière (**14**), ayant une source de lumière incidente (**16**), capable d'émettre une lumière incidente, vers une zone illuminée utile ;
b) un système de récupération de lumière (**28**) ayant un système de conditionnement de la lumière réfléchie (**30**) et capable de récupérer une lumière réfléchie d'une zone de vision utile au travers du système de conditionnement de lumière réfléchie (**30**);
c) un capteur photoélectrique (**26**) pour convertir la lumière réfléchie récupérée au travers du système de conditionnement de lumière réfléchie (**30**) en un signal électrique représentatif de la lumière réfléchie récupérée ;
**caractérisé en ce que** le dispositif (**10**) comprend un système optique auxiliaire (**36**) qui est disposé de manière permanente dans la zone de vision utile, à distance du capteur (**26**), et en série avec le système de conditionnement de lumière réfléchie (**30**) de telle sorte qu'une portion mais pas la totalité de la zone de vision utile est interceptée par le système optique auxiliaire (**36**).

2. Dispositif de lecture de code-barres selon la revendication 1, **caractérisé en ce que** le système optique auxiliaire (**36**) définit une zone de vision utile réduite, non interceptée par le système optique auxiliaire, qui a une étendue suffisante pour qu'un premier code-barres (**38**) disposé dans la zone de vision utile réduite soit illuminé par le système d'émission de lumière, et pour que la lumière réfléchie par ledit code-barres (**38**) soit reçue par le capteur photoélectrique sans être interceptée par le système optique auxiliaire.

3. Dispositif de lecture de code-barres selon la revendication 2, **caractérisé en ce que** le dispositif (**10**) est agencé de telle sorte que le capteur (**26**) est capable de recevoir simultanément une lumière réfléchie par un premier code-barres (**38**) dans la zone de vision utile réduite, sans passage au travers du système optique auxiliaire (**36**), et une lumière réfléchie par un second code-barres (**40**) dans la zone de vision utile auxiliaire, au travers du système optique auxiliaire (**36**).

4. Dispositif de lecture de code-barres selon l'une quelconque des revendications précédentes, **caractérisé en ce que** le système optique auxiliaire (**36**) est agencé à l'extérieur du système de conditionnement de lumière réfléchie (**30**) et, selon une direction de lumière réfléchie, du même côté du système de conditionnement de lumière réfléchie (**30**) que la zone de vision utile principale, à l'opposé du côté du capteur (**26**).

5. Dispositif de lecture de code-barres selon l'une quelconque des revendications précédentes, **caractérisé en ce que** le système optique auxiliaire (**36**) est capable de transmettre au capteur (**26**) une image d'un code-barres complet disposé dans la zone de vision utile auxiliaire.

6. Dispositif de lecture de code-barres selon l'une quelconque des revendications précédentes, **caractérisé en ce que** le système optique auxiliaire (**36**) est agencé à l'intérieur de la zone illuminée utile de telle sorte qu'une portion de la zone illuminée utile est interceptée par le système optique auxiliaire (**36**) et définit une zone illuminée auxiliaire qui est illuminée au travers du système optique auxiliaire (**36**).

7. Dispositif de lecture de code-barres selon l'une quelconque des revendications précédentes, **caractérisé en ce que** le système optique auxiliaire (**36**) est agencé à l'extérieur d'un système de conditionnement de lumière incidente (**18**) de l'appareil (**12**), selon la direction de lumière incidente, d'un même côté du système de conditionnement de lumière incidente (**18**) que la zone illuminée utile.

8. Dispositif de lecture de code-barres selon l'une quelconque des revendications précédentes, **caractérisé en ce que** le système optique auxiliaire (**36**) est un système optique convergent.

9. Dispositif de lecture de code-barres selon la revendication 8, **caractérisé en ce que** la lumière incidente comporte au moins un faisceau de lumière incidente qui est focalisé par le système d'émission de lumière (**14**) jusqu'à une première taille minimale de focalisation dans une zone de travail utile principale comprise dans la zone de vision utile et dans la zone illuminée utile, et **en ce que** le système optique auxiliaire (**36**) focalise le faisceau de lumière incidente jusqu'à une seconde taille minimale de focalisation dans une zone de travail utile auxiliaire comprise dans la zone de vision utile auxiliaire et dans une zone illuminée auxiliaire, ladite seconde taille minimale de focalisation étant plus petite que la première taille minimale de focalisation.

10. Dispositif de lecture de code-barres selon la revendication 9, **caractérisé en ce que** le système optique auxiliaire (**36**) a un plan focal objet situé derrière la zone de travail utile auxiliaire.

11. Dispositif de lecture de code-barres selon l'une des revendications 9 ou 10, **caractérisé en ce que** le système optique auxiliaire (**36**) est agencé dans la zone de travail utile principale.

12. Dispositif de lecture de code-barres auxiliaire selon l'une quelconque des revendications précédentes, **caractérisé en ce que** le système optique auxiliaire (**36**) a une distance focale fixe.

13. Dispositif de lecture de code-barres selon l'une quelconque des revendications précédentes, **caractérisé en ce que** le système optique auxiliaire (**36**) a une position fixe par rapport au capteur pendant le fonctionnement du dispositif.

14. Dispositif de lecture de code-barres selon l'une quelconque des revendications précédentes, **caractérisé en ce que** l'intégralité du système de récupération de lumière (**28**) a une position fixe par rapport au capteur (**26**) pendant le fonctionnement du dispositif.

15. Dispositif de lecture de code-barres selon l'une quelconque des revendications précédentes, **caractérisé en ce que** l'appareil de lecture de codes-barres (**12**) comporte un boîtier (**42**) qui contient au moins le système d'émission de lumière (**14**), le système de récupération de lumière (**28**) et le capteur (**26**), et **en ce que** le système optique auxiliaire (**36**) est agencé à l'extérieur du boîtier (**42**).

16. Machine (**50**) pour l'analyse automatisée d'un échantillon, comprenant au moins un tiroir (**56, 58**) sur lequel au moins un élément peut être chargé, le tiroir étant mobile d'une position de chargement à une position d'utilisation, **caractérisé en ce que** la machine comprend un dispositif de lecture de code-barres (**10**) selon l'une quelconque des revendications précédentes pour lire au moins un premier code-barres (**38**) ayant une densité inférieure à un niveau de seuil de densité et un second code-barres ayant une densité supérieure à un niveau de seuil de densité.

17. Machine selon la revendication 16 en combinaison avec la revendication 8, **caractérisée en ce qu'**elle comporte plusieurs tiroirs agencés côte-à-côte et mobile indépendamment l'un de l'autre entre une position de chargement et une position d'utilisation, et **en ce que** le dispositif de lecture de code-barres (**10**) est capable de lire, sur un premier tiroir (**56**), un premier code-barres (**38**) ayant une densité inférieure au niveau de seuil de densité, et, sur un second tiroir (**58**), au travers du système optique auxiliaire convergent (**36**), un second code-barres (**40**) ayant une densité supérieure au niveau de seuil de densité.

18. Machine selon la revendication 17, **caractérisée en ce que** le long de la direction de lumière incidente, le premier tiroir (**56**) est agencé plus près de la source de lumière incidente (**16**) que le second tiroir (**58**).

19. Machine selon l'une des revendications 17 ou 18, **caractérisée en ce que**, dans au moins une première position de lecture de codes-barres du premier tiroir (**56**), le premier code-barres est agencé dans une zone de vision utile principale et, dans au moins une première position de lecture de codes-barres du second tiroir (**58**), le deuxième code-barres est agencé dans une zone de vision utile auxiliaire.

20. Machine selon la revendication 19, **caractérisée en ce que**, dans au moins une position de lecture de codes-barres du second tiroir (**58**), un code-barres situé sur le second tiroir est agencé dans la zone de vision utile principale.

21. Machine selon l'une des revendications 16 à 20, **caractérisée en ce qu'**un boîtier (**42**) de l'appareil de lecture de code-barres (12) et le système optique auxiliaire (**36**) sont fixés indépendamment l'un de l'autre sur un châssis (**70**) de la machine (**50**).

22. Machine selon l'une des revendications 16 à 21, **caractérisée en ce qu'**un boîtier (**42**) de l'appareil de lecture de codes-barres (**12**) et le système optique auxiliaire (**36**) sont agencés à distance sur la machine (**70**) de telle que sorte qu'au moins un tiroir (**56**) s'étend entre le boîtier (**42**) de l'appareil de lecture à code-barres (**12**) et le système optique auxiliaire (**36**).

## Patentansprüche

1. Strichcode-Lesevorrichtung (10), umfassend ein Strichcode-Lesegerät (12), das aufweist:
a) ein Lichtemissionssystem (14), das eine Quelle einfallenden Lichts (16) aufweist, das geeignet ist, einfallendes Licht zu einem beleuchteten Nutzbereich zu emittieren,
b) ein System der Lichtrückgewinnung (28), das ein Aufbereitungssystem des reflektierten Lichts (30) aufweist und geeignet ist, reflektiertes Licht von einem Nutzsichtbereich durch das Aufbereitungssystem des reflektierten Lichts (30) zurückzugewinnen,
c) einen photoelektrischen Sensor (26), um das reflektierte Licht, das durch das Aufbereitungssystem des reflektierten Lichts (30) zurückgewonnen wird, in ein elektrisches Signal umzuwandeln, das für das wiedergewonnene reflektierte Licht repräsentativ ist,
**dadurch gekennzeichnet, dass** die Vorrichtung (10) ein optisches Hilfssystem (36) aufweist, das permanent in dem Nutzsichtbereich entfernt von dem Sensor (26) und in Reihe mit dem Aufbereitungssystem des reflektierten Lichts (30) derart angeordnet ist, dass ein Abschnitt, aber nicht der gesamte Nutzsichtbereich durch das optische Hilfssystem (36) abgefangen wird.

2. Strichcode-Lesevorrichtung gemäß Anspruch 1, **dadurch gekennzeichnet, dass** das optische Hilfssystem (36) einen reduzierten Sichtbereich definiert, der von dem optischen Hilfssystem nicht abgefangen wird, der ein ausreichendes Ausmaß aufweist, damit ein erster Strichcode (38), der in dem reduzierten Nutzsichtbereich angeordnet ist, von dem Lichtemissionssystem beleuchtet wird, und damit das Licht, das von dem Strichcode (38) reflektiert wird, von dem photoelektrischen Sensor empfangen wird, ohne von dem optischen Hilfssystem abgefangen zu werden.

3. Strichcode-Lesevorrichtung gemäß Anspruch 2, **dadurch gekennzeichnet, dass** die Vorrichtung (10) derart ausgebildet ist, dass der Sensor (26) geeignet ist, gleichzeitig Licht, das von einem ersten Strichcode (38) in dem reduzierten Nutzsichtbereich ohne Durchgang durch das optische Hilfssystem (36) reflektiert wird, und Licht zu empfangen, das von einem zweiten Strichcode (40) in dem Hilfsnutzsichtbereich mit Durchgang durch das optische Hilfssystem (36) reflektiert wird.

4. Strichcode-Lesevorrichtung gemäß einem der vorhergehenden Ansprüche, **dadurch gekennzeichnet, dass** das optische Hilfssystem (36) außerhalb des Aufbereitungssystems des reflektierten Lichts (30) und in einer Richtung des reflektierten Lichts auf der gleichen Seite des Aufbereitungssystems des reflektierten Lichts (30) wie der Hauptnutzsichtbereich auf der gegenüberliegenden Seite des Sensors (26) ausgebildet ist.

5. Strichcode-Lesevorrichtung gemäß einem der vorhergehenden Ansprüche, **dadurch gekennzeichnet, dass** das optische Hilfssystem (36) geeignet ist, an den Sensor (26) ein Bild eines vollständigen Strichcodes zu senden, der in dem Hilfsnutzsichtbereich angeordnet ist.

6. Strichcode-Lesevorrichtung gemäß einem der vorhergehenden Ansprüche, **dadurch gekennzeichnet, dass** das optische Hilfssystem (36) innerhalb des beleuchteten Nutzbereichs derart ausgebildet ist, dass ein Abschnitt des beleuchteten Nutzbereichs von dem optischen Hilfssystem (36) abgefangen wird und einen beleuchteten Hilfsbereich bildet, der durch das optische Hilfssystem (36) beleuchtet wird.

7. Strichcode-Lesevorrichtung gemäß einem der vorhergehenden Ansprüche, **dadurch gekennzeichnet, dass** das optische Hilfssystem (36) außerhalb des Aufbereitungssystems des einfallenden Lichts (18) des Geräts (12) in einer Richtung des einfallenden Lichts auf der gleichen Seite des Aufbereitungssystems des einfallenden Lichts (18) wie der beleuchtete Nutzbereich ausgebildet ist.

8. Strichcode-Lesevorrichtung gemäß einem der vorhergehenden Ansprüche, **dadurch gekennzeichnet, dass** das optische Hilfssystem (36) ein konvergentes optisches System ist.

9. Strichcode-Lesevorrichtung gemäß Anspruch 8, **dadurch gekennzeichnet, dass** das einfallende Licht mindestens einen einfallenden Lichtstrahl aufweist, der durch das Lichtemissionssystem (14) bis auf eine erste minimale Fokussiergröße in einem Hauptnutzarbeitsbereich, der in dem Nutzsichtbereich und in dem beleuchteten Nutzsichtbereich liegt, fokussiert wird, und dadurch, dass das optische Hilfssystem (36) den einfallenden Lichtstrahl bis auf eine zweite minimale Fokussiergröße in einem Hilfsnutzarbeitsbereich, der in dem Hilfsnutzsichtbereich und in dem beleuchteten Hilfsbereich liegt, fokussiert, wobei die zweite minimale Fokussiergröße kleiner als die erste minimale Fokussiergröße ist.

10. Strichcode-Lesevorrichtung gemäß Anspruch 9, **dadurch gekennzeichnet, dass** das optische Hilfssystem (36) eine Objektbrennebene aufweist, die sich hinter dem Hilfsnutzarbeitsbereich befindet.

11. Strichcode-Lesevorrichtung gemäß einem der Ansprüche 9 oder 10, **dadurch gekennzeichnet, dass** das optische Hilfssystem (36) in dem Hauptnutzarbeitsbereich angeordnet ist.

12. Hilfsstrichcode-Lesevorrichtung gemäß einem der vorhergehenden Ansprüche, **dadurch gekennzeichnet, dass** das optische Hilfssystem (36) eine feste Brennweite aufweist.

13. Strichcode-Lesevorrichtung gemäß einem der vorhergehenden Ansprüche, **dadurch gekennzeichnet, dass** das optische Hilfssystem (36) in Bezug auf den Sensor während des Betriebs der Vorrichtung eine feste Position aufweist.

14. Strichcode-Lesevorrichtung gemäß einem der vorhergehenden Ansprüche, **dadurch gekennzeichnet, dass** das gesamte System der Lichtrückgewinnung (28) in Bezug auf den Sensor (26) während des Betriebs der Vorrichtung eine feste Position aufweist.

15. Strichcode-Lesevorrichtung gemäß einem der vorhergehenden Ansprüche, **dadurch gekennzeichnet, dass** das Strichcode-Lesegerät (12) ein Gehäuse (42) aufweist, das mindestens das Lichtemissionssystem (14), das System der Lichtrückgewinnung (28) und den Sensor (26) enthält, und dadurch, dass das optische Hilfssystem (36) außerhalb des Gehäuses (42) angeordnet ist.

16. Maschine (50) zur automatisierten Analyse einer Probe, umfassend mindestens eine Schublade (56, 58), auf die mindestens ein Element geladen werden kann, wobei die Schublade von einer Beladungsposition in eine Verwendungsposition bewegbar ist, **dadurch gekennzeichnet, dass** die Maschine eine Strichcode-Lesevorrichtung (10) gemäß einem der vorhergehenden Ansprüche aufweist, um mindestens einen ersten Strichcode (38), der eine Dichte aufweist, die niedriger als ein Dichteschwellenwert ist, und einen zweiten Strichcode zu lesen, der eine Dichte aufweist, die größer als ein Dichteschwellenwert ist.

17. Maschine gemäß Anspruch 16 in Kombination mit Anspruch 8, **dadurch gekennzeichnet, dass** sie mehrere Schubladen aufweist, die Seite an Seite und unabhängig voneinander bewegbar zwischen einer Beladungsposition und einer Verwendungsposition angeordnet sind, und dadurch, dass die Strichcode-Lesevorrichtung (10) geeignet ist, auf einer ersten Schublade (56) einen ersten Strichcode (38), der eine Dichte aufweist, die niedriger als ein Dichteschwellenwert ist, und auf einer zweiten Schublade (58) durch das konvergente optische Hilfssystem (36) einen zweiten Strichcode (40) zu lesen, der eine Dichte aufweist, die größer als ein Dichteschwellenwert ist.

18. Maschine gemäß Anspruch 17, **dadurch gekennzeichnet, dass** die erste Schublade (56) entlang der Richtung des einfallenden Lichts näher an der Quelle einfallenden Lichts (16) als die zweite Schublade (58) angeordnet ist.

19. Maschine gemäß einem der Ansprüche 17 oder 18, **dadurch gekennzeichnet, dass** der erste Strichcode in mindestens einer ersten Strichcodeleseposition der ersten Schublade (56) in einem Hauptnutzsichtbereich angeordnet ist, und dass der zweite Strichcode in mindestens einer ersten Strichcodeleseposition der zweiten Schublade (58) in einem Hilfssichtbereich angeordnet ist.

20. Maschine gemäß Anspruch 19, **dadurch gekennzeichnet, dass** ein Strichcode in mindestens einer Strichcodeleseposition der zweiten Schublade (58) in dem Hauptnutzsichtbereich angeordnet ist.

21. Maschine gemäß einem der Ansprüche 16 bis 20, **dadurch gekennzeichnet, dass** ein Gehäuse (42) des Strichcode-Lesegeräts und das optische Hilfssystem (36) unabhängig voneinander auf einem Gestell (70) der Maschine (50) befestigt sind.

22. Maschine gemäß einem der Ansprüche 16 bis 21, **dadurch gekennzeichnet, dass** ein Gehäuse (42) des Strichcode-Lesegeräts (12) und das optische Hilfssystem (36) mit Abstand auf der Maschine (70) derart angeordnet sind, dass sich mindestens eine Schublade (56) zwischen dem Gehäuse (42) des Strichcode-Lesegeräts (12) und dem optische Hilfssystem (36) erstreckt.

## Claims

1. A barcode reader device (**10**) comprising a barcode reader apparatus (**12**) having:
a) a light-emitting system (**14**), having an incident light source (**16**), capable of emitting an incident light, toward a useful illuminated zone;
b) a light recovery system (**28**) having a system for conditioning reflected light (**30**) capable of recovering light reflected by a useful viewing zone through the reflected light conditioning system (**30**);
c) a photoelectric sensor (**26**) for converting the reflected light recovered through the reflected light conditioning system (**30**) into an electric signal representative of the recovered reflected light;
**characterized in that** the device (**10**) comprises an auxiliary optical system (**36**) that is arranged permanently in the useful viewing zone, at a distance from the sensor (**26**), and in series with the reflected light conditioning system (**30**) such that a portion, but not all, of the useful viewing zone is intercepted by the auxiliary optical system (**36**).

2. The barcode reader device according to claim 1, **characterized in that** the auxiliary optical system (**36**) defines a reduced useful viewing zone, not intercepted by the auxiliary optical system, which has a sufficient span for a first barcode (**38**) positioned in the reduced useful viewing zone to be illuminated by the light-emitting system, and for the light reflected by said barcode (**38**) to be recovered by the photoelectric sensor without being intercepted by the auxiliary optical system.

3. The barcode reader device according to one of claims 1 or 2, **characterized in that** the device (**10**) is arranged such that the sensor (**26**) is capable of simultaneously receiving light reflected by a first barcode (**38**) in the reduced useful viewing zone, without passing through the auxiliary optical system (**36**), and light reflected by a second barcode (**40**) in the auxiliary useful viewing zone, through the auxiliary optical system (**36**).

4. The barcode reader device according to any one of the preceding claims, **characterized in that** the auxiliary optical system (**36**) is arranged outside the reflected light conditioning system (**30**) and, in a reflected light direction, on the same side of the reflected light conditioning system (**30**) as the main useful viewing zone, opposite the side of the sensor (**26**).

5. The barcode reader device according to any one of the preceding claims, **characterized in that** the auxiliary optical system (**36**) is capable of sending the sensor (**26**) an image of a complete barcode arranged in the auxiliary useful viewing zone.

6. The barcode reader device according to any one of the preceding claims, **characterized in that** the auxiliary optical system (**36**) is arranged inside the useful illuminated zone such that a portion of the useful illuminated zone is intercepted by the auxiliary optical system (**36**) and defines an auxiliary illuminated zone that is illuminated through the auxiliary optical system (**36**).

7. The barcode reader device according to any one of the preceding claims, **characterized in that** the auxiliary optical system (**36**) is arranged outside an incident light conditioning system (**18**) of the apparatus (**12**), in the incident light direction, on a same side of the incident light conditioning system (**18**) as the useful illuminated zone.

8. The barcode reader device according to any one of the preceding claims, **characterized in that** the auxiliary optical system (**36**) is a convergent optical system.

9. The barcode reader device according to claim 8, **characterized in that** the incident light includes at least one incident light beam that is focused by the light-emitting system (**14**) up to a first minimum focusing size and a main useful working zone comprised in the useful viewing zone and the useful illuminated zone, and **in that** the auxiliary optical system (**36**) focuses the incident light beam up to a second minimum focusing size in an auxiliary useful working zone comprised in the auxiliary useful viewing zone and in an auxiliary illuminated zone, said second minimum focusing size being smaller than the first minimum focusing size.

10. The barcode reader device according to any one of the preceding claims, **characterized in that** the auxiliary optical system (**36**) has an object focal plane located behind the auxiliary useful working zone.

11. The barcode reader device according to any one of the preceding claims, **characterized in that** the auxiliary optical system (**36**) is arranged in the main useful working zone.

12. The auxiliary barcode reader device according to any one of the preceding claims, **characterized in that** the auxiliary optical system (**36**) has a fixed focal distance.

13. The barcode reader device according to any one of the preceding claims, **characterized in that** the auxiliary optical system (**36**) has a fixed position relative to the sensor during the operation of the device.

14. The barcode reader device according to any one of the preceding claims, **characterized in that** the entire light recovery system (**28**) has a fixed position relative to the sensor (**26**) during the operation of the device.

15. The barcode reader device according to any one of the preceding claims, **characterized in that** the barcode reader apparatus (**12**) includes a housing (**42**) that contains at least the light-emitting system (**14**), the light recovery system (**28**) and the sensor (**26**), and **in that** the auxiliary optical system (**36**) is arranged outside the housing (**42**).

16. A machine (**50**) for the automated analysis of a specimen, comprising at least one slide (**56, 58**) on which at least one element can be loaded, the slide being movable from a loading position to a usage position, **characterized in that** the machine comprises a barcode reader device (**10**) according to any one of the preceding claims for reading at least a first barcode (**38**) having a density below a density threshold level and a second barcode having a density above a density threshold level.

17. The machine according to claim 16 combined with claim 8, **characterized in that** it includes several slides arranged side by side and movable independently of one another between a loading position and a usage position, and **in that** the barcode reader device (**10**) is capable of reading, on a first slide (**56**), a first barcode (**38**) having a density below the density threshold level, and, on a second slide (**58**), through the convergent auxiliary optical system (**36**), a second barcode (**40**) having a density above the density threshold level.

18. The machine according to claim 17, **characterized in that** along the incident light direction, the first slide (**56**) is arranged closer to the incident light source (**16**) than the second slide (**58**).

19. The machine according to one of claims 17 or 18, **characterized in that**, in at least a first barcode reading position of the first slide (**56**), the first barcode is arranged in a main useful viewing zone and, in at least a first barcode reading position of the second slide (**58**), the second barcode is arranged in an auxiliary useful viewing zone.

20. The machine according to one of claims 17 to 19, **characterized in that**, in at least one barcode reading position of the second slide (**58**), a barcode located on the second slide is arranged in the main useful viewing zone.

21. The machine according to one of claims 16 to 20, **characterized in that** a housing (**42**) of the barcode reading apparatus (**14**) and the auxiliary optical system (**36**) are fastened independently of one another on a frame (**70**) of the machine (**50**).

22. The machine according to one of claims 16 to 21, **characterized in** the housing (**42**) of the barcode reading apparatus (**12**) and the auxiliary optical system (**36**) are arranged at a distance on the machine (**70**) such that at least one slide (**56**) extends between the housing (**42**) of the barcode reading apparatus (**12**) in the auxiliary optical system (**36**).
